# FASCICULE DE BREVET EUROPEEN

(11) **EP 2 779 334 B1**
(45) Date de publication et mention de la délivrance du brevet: **19.08.2015**
(21) Numéro de dépôt: 14155362.8
(22) Date de dépôt: 17.02.2014
(51) Int. Cl.: H02B 1/32

(54) **Enveloppe électrique à agencement mécanique amélioré**
Schaltschrank mit verbesserter mechanischer Anordnung
Electrical enclosure with improved mechanical arrangement

(30) Priorité: 12.03.2013 FR 1352174
(43) Date de publication de la demande: 17.09.2014
(73) Titulaire: Schneider Electric Industries SAS, 92500 Rueil-Malmaison (FR)
(72) Inventeur: Laye, Jérôme, 38050 GRENOBLE Cedex 09 (FR); Agnaou, Abderrahmane, 38050 GRENOBLE Cedex 09 (FR); Wasner, Olivier, 38050 GRENOBLE Cedex 09 (FR); Perrin, Alain, 38050 GRENOBLE Cedex 09 (FR); Socquet, Dominique, 38050 GRENOBLE Cedex 09 (FR)
(74) Mandataire: Bié, Nicolas

(56) Documents cités:
- EP-A1- 0 668 644
- EP-A1- 1 213 805
- DE-A1- 19 539 420

## Description

### Domaine technique de l'invention

La présente invention se rapporte à une enveloppe électrique à agencement mécanique amélioré.

### Etat de la technique

Il est connu du brevet US7239521, une enveloppe électrique comprenant une plaque de fond perforée sur laquelle il est possible de venir monter des modules, par l'intermédiaire de crochets et vis, chaque module présentant une base, avec par exemple un rail DIN monté sur une face de ladite base et une pluralité de composants électriques fixés sur le rail DIN. Chaque module comporte une interface pour se connecter sur un bus commun assurant à la fois l'alimentation électrique et le transfert de données entre les modules.

Le document EP 0668 644 divulgue une platine avec des brides par connexion des câbles. Cette configuration présente certains inconvénients. Elle nécessite un câblage par l'avant entre les modules et ne permet pas d'optimiser la dissipation thermique des modules.

Le but de l'invention est donc de proposer une enveloppe électrique dans lequel l'agencement mécanique permet une facilité de câblage et une dissipation thermique optimisée.

### Exposé de l'invention

Ce but est atteint par une enveloppe électrique comportant une partie avant et une partie arrière, une ossature externe définissant la forme générale de l'enveloppe électrique et une ossature interne comprenant des montants et traverses de fixation positionnés dans un même plan, un ensemble fonctionnel fixé sur l'ossature interne et comprenant une pluralité d'unités fonctionnelles dotées chacune d'une platine (200) destinée à recevoir un ou plusieurs appareils électriques, ladite enveloppe se caractérisant en ce que :
- les platines sont fixées sur lesdits montants et traverses de fixation de manière contigüe pour former une paroi de séparation agencée suivant ledit plan et délimitant un premier espace situé vers la partie avant et un deuxième espace situé vers la partie arrière,
- chaque platine comporte au moins une ouverture,
- l'ensemble fonctionnel comporte au moins un support fixé de manière indépendante sur un montant ou traverse de l'ossature interne et un connecteur agencé sur ledit support, ledit support étant positionné sur le montant ou traverse de fixation de manière à permettre au connecteur de traverser ladite ouverture réalisée à travers la platine.

Selon une particularité, chaque platine comporte des encoches destinées à coopérer avec des orifices réalisés sur des montants ou traverses de fixation de l'ossature interne.

Selon une autre particularité, le support de connecteur comporte un système de fixation par clipsage sur un montant ou traverse de l'ossature interne.

Selon une autre particularité, chaque platine est de forme rectangulaire présentant une face avant de fixation pour des appareils électriques et une face arrière.

Selon une autre particularité, la platine comporte un rail DIN ou une plaque fixé sur sa face arrière de manière à pouvoir fixer un ou plusieurs appareils électriques.

Selon une autre particularité, l'ossature interne comporte deux montants verticaux, dits principaux et plusieurs traverses horizontales, dites principales, s'étendant entre les deux montants principaux.

Selon une autre particularité, chaque platine comporte une échancrure permettant le passage d'une traverse principale.

Selon une autre particularité, l'ossature interne comporte au moins un montant vertical, dit secondaire, s'étendant entre deux traverses principales.

Selon une autre particularité, l'ossature interne comporte au moins une traverse horizontale, dite secondaire s'étendant entre un montant secondaire et un montant principal ou entre deux montants secondaires.

Selon une autre particularité, chaque platine comporte deux chants verticaux parallèles munis, sur leur partie basse, d'encoches agencées pour coopérer avec des orifices réalisés sur un premier montant ou traverse de l'ossature interne et, sur leur partie haute, d'une découpe permettant d'épouser la forme d'un deuxième montant ou traverse de l'ossature interne.

Selon une autre particularité, la platine comporte une ouverture destinée à accueillir un anneau de levage ou une poignée de préhension.

### Brève description des figures

D'autres caractéristiques et avantages vont apparaître dans la description détaillée qui suit faite en regard des dessins annexés suivants :
- la figure 1 représente l'ossature externe d'une enveloppe électrique conforme à l'invention, dans laquelle sont positionnées des unités fonctionnelles,
- la figure 2A représente l'ossature externe et l'ossature interne de l'enveloppe électrique de l'invention, sans unité fonctionnelle,
- les figures 2B et 2C représentent un détail de l'enveloppe électrique de l'invention et permettent d'illustrer un exemple d'agencement de l'ossature interne et d'unités fonctionnelles sur ladite ossature,
- Les figures 2D et 2E représentent un détail de l'enveloppe électrique de l'invention et permettent d'illustrer un autre exemple d'agencement de l'ossature interne et d'unités fonctionnelles sur cette ossature,
- la figure 3 représente un premier exemple d'une unité fonctionnelle pouvant être installée à l'intérieur de l'enveloppe électrique de l'invention,
- les figures 4A et 4B représentent un autre exemple d'une unité fonctionnelle pouvant être installée à l'intérieur de l'enveloppe électrique de l'invention, respectivement vue face avant et vue face arrière,
- La figure 4C représente l'arrière d'une platine d'une unité fonctionnelle,
- la figure 5 représente un autre exemple d'une unité fonctionnelle pouvant être installée à l'intérieur de l'enveloppe électrique de l'invention, sur laquelle est monté au moins un anneau de levage ou une poignée de préhension,
- la figure 6 représente un support de connecteur employé dans l'invention,
- la figure 7 illustre la mise en place du support de connecteur sur un montant interne de l'enveloppe électrique,
- les figures 8A à 8C illustrent le principe de fixation d'une unité fonctionnelle à l'intérieur de l'enveloppe électrique,
- les figures 9A à 9C illustrent le principe de montage des montants verticaux de l'ossature interne sur l'ossature externe de l'enveloppe électrique,
- Les figures 10A et 10B illustrent la fixation d'une première extrémité d'une traverse principale sur un montant principal,
- Les figures 11A et 11B illustrent la fixation d'une deuxième extrémité d'une traverse principale sur un montant principal.
- La figure 12 illustre le principe de montage d'une platine d'une unité fonctionnelle sur une plaque de montage rapide.

### Description détaillée d'au moins un mode de réalisation

L'invention concerne une enveloppe électrique et plus particulièrement son agencement mécanique particulier et sa distribution électrique.

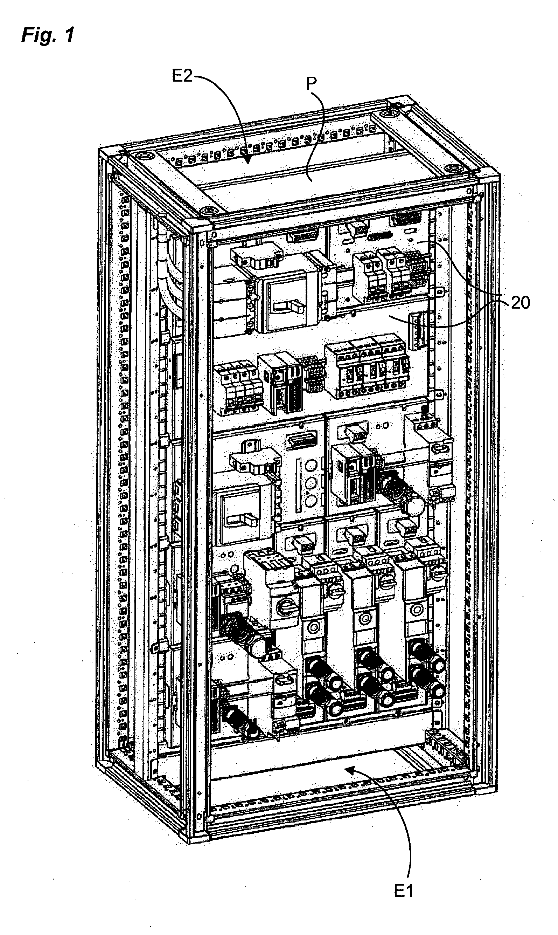

En référence à la figure 1, une enveloppe électrique de l'invention comporte une ossature externe présentant par exemple une forme parallélépipédique rectangle.

L'ossature externe comprend ainsi deux bases identiques, formées chacune de quatre montants assemblés en rectangle. Les deux bases sont montées parallèles et sont assemblées entre elles grâce à quatre montants verticaux, dits externes. Les quatre montants verticaux externes sont perpendiculaires aux deux bases de manière à former quatre faces latérales parallèles deux à deux.

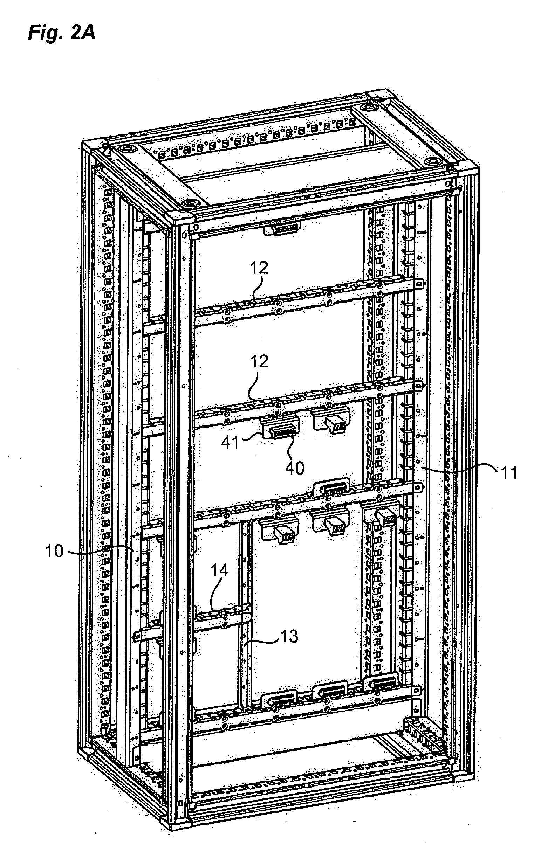

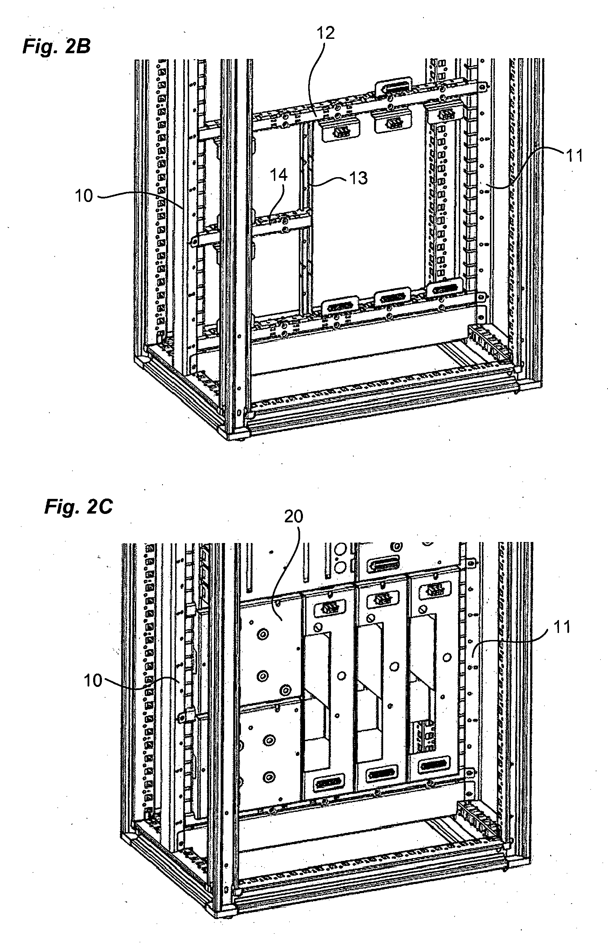

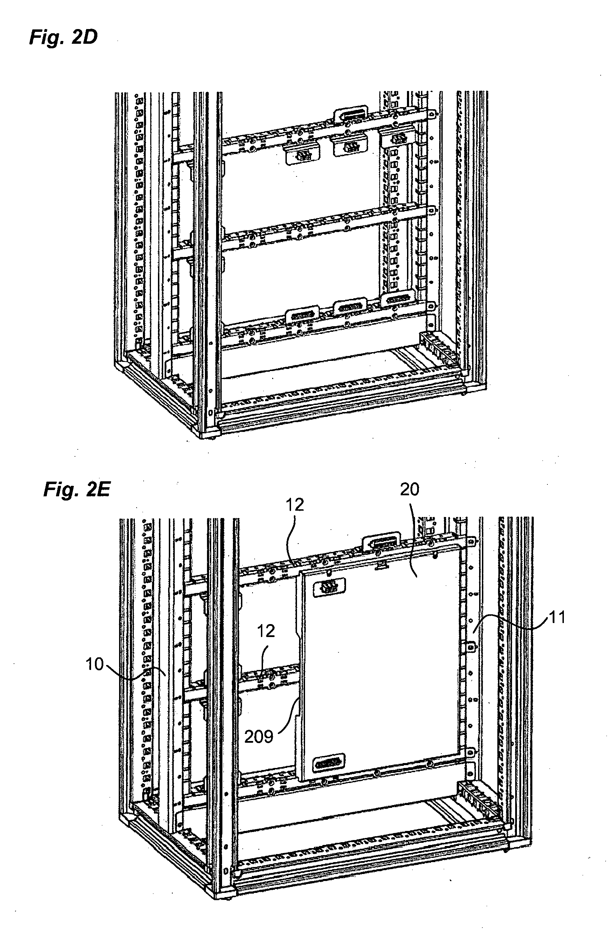

L'enveloppe électrique comporte également une ossature interne permettant la fixation d'appareils électrique à l'intérieur de l'enveloppe. Cette ossature interne comporte également deux montants de fixation verticaux, parallèles entre eux, dits montants principaux 10, 11 (figure 2). Les deux montants principaux 10, 11 s'étendent entre les deux bases, dans deux faces latérales parallèles de l'enveloppe.

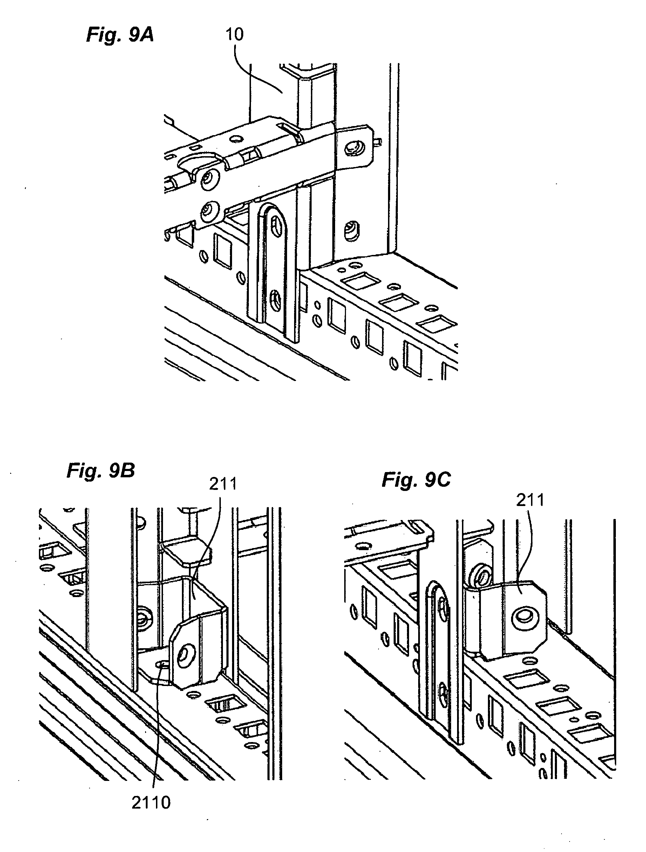

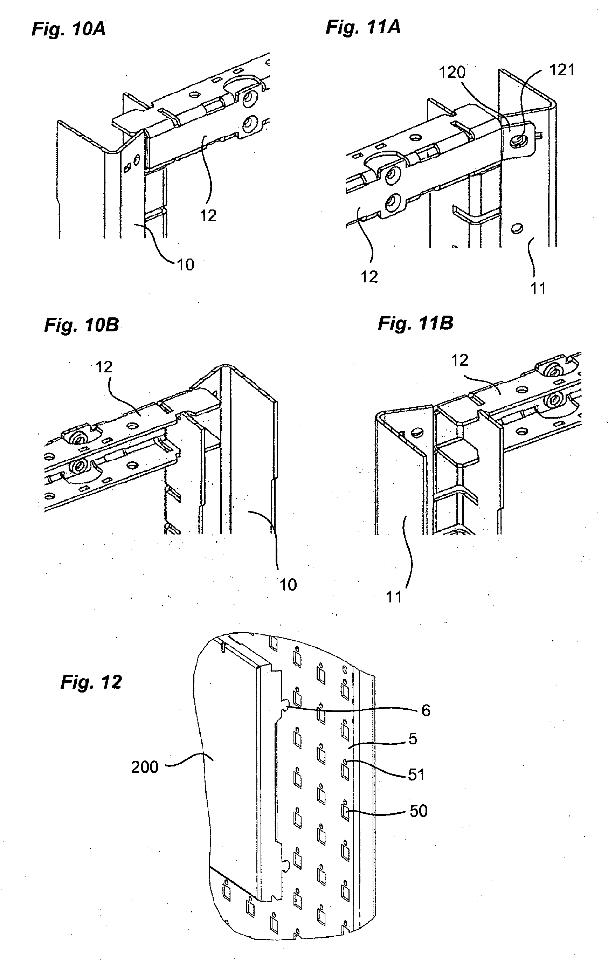

En référence aux figures 9A à 9C, l'ossature interne comporte notamment une pièce 211 d'interface permettant la fixation d'un montant principal 10, 11 sur l'ossature externe. Cette pièce 211 possède un orifice 2110 sur sa face inférieure pour se fixer sur l'ossature externe de l'enveloppe ainsi que deux languettes réalisant son indexation en rotation. De plus la pièce 211 comporte plusieurs trous de fixation sur des ailes latérales permettant la fixation d'un montant principal 10, 11. L'ossature interne comporte par ailleurs des traverses 12 horizontales, dites principales, s'étendant entre ses deux montants principaux 10, 11. Les montants principaux comportent des moyens de fixation, préférentiellement réalisés à intervalles réguliers, permettant la fixation des traverses principales 12 sur toute leur hauteur. La première extrémité d'une traverse principale 12 s'insère dans un premier montant principal 10 par coincement mécanique, avantageusement sans fixation (figures 10A et 10B). La traverse principale 12 est ensuite pivotée suivant un axe horizontal jusqu'à une position finale dans laquelle sa deuxième extrémité vient au contact du second montant principal 11 (figures 11A et 11B). La traverse principale 12 possède à sa deuxième extrémité une patte de fixation 120 inclinée lui permettant d'épouser la forme du montant, ladite patte de fixation 120 étant munie d'un orifice 121 dédiée à recevoir une vis de fixation. La traverse principale 12 possède également à sa deuxième extrémité des encoches pour indexer latéralement la position de ladite traverse 12 dans le montant principal 11, assurant ainsi un référencement précis des unités fonctionnelles sur l'ossature interne.

L'ossature interne peut également comporter un ou plusieurs montants verticaux, dits montants secondaires 13, s'étendant entre deux traverses principales 12. Chaque traverse principale comporte des moyens de fixation, préférentiellement réalisés à intervalles réguliers, permettant la fixation des montants secondaires 13.

L'ossature interne peut également comporter une ou plusieurs traverses secondaires 14 s'étendant entre un montant secondaire 13 et un montant principal 10, 11 ou entre deux montants secondaires. Cette combinaison de montants secondaires 13 et de traverses secondaires 14 permet la mise en place d'unités fonctionnelles 20 de dimensions variables sur l'ossature interne (figures 2B et 2C).

Dans un autre mode de réalisation représenté sur les figures 2D et 2E, il est possible de disposer des unités fonctionnelles de dimensions variables sur une même largeur du système fonctionnel en utilisant uniquement des traverses horizontales. Dans ce mode de réalisation, une traverse horizontale 12 passe derrière l'unité fonctionnelle de grande dimension (Figure 2E).

Un montant secondaire 13 comporte des moyens de fixation, préférentiellement réalisés à intervalles réguliers, permettant la fixation de traverses secondaires 14.

Avantageusement, les intervalles de fixation sont tous réalisés au même pas de manière à pouvoir former, à partir des montants principaux 10, 11 et secondaires 13 et des traverses principales 12 et secondaires 14, plusieurs rectangles dimensionnés de manière adaptée pour la fixation d'unités fonctionnelles, décrites ci-dessous.

Selon l'invention, l'enveloppe électrique est en effet destinée à accueillir un ensemble fonctionnel comportant une pluralité d'unités fonctionnelles 20 fixées de manière contigüe sur l'ossature interne de l'enveloppe électrique afin de délimiter une paroi de séparation P dans l'enveloppe électrique.

Selon l'invention, la paroi de séparation P (figure 1) formée par la mise en place des unités fonctionnelles 20 sur l'ossature interne permet de délimiter un premier espace E1 situé vers la partie avant de l'enveloppe électrique et un deuxième espace situé vers la partie arrière de l'enveloppe électrique. La paroi de séparation P permet ainsi de cloisonner le premier espace E1 par rapport au deuxième espace E2. Cette paroi de séparation permet avantageusement d'exploiter le volume en profondeur de l'enveloppe électrique. Ce volume peut en effet être exploité pour loger tout ou partie du câblage des appareils électriques dans le deuxième espace E2. L'agencement et l'organisation du câblage, par exemple pour des questions de montage ou de maintenance, se trouve donc être grandement améliorés. Le câblage à l'arrière permet également d'améliorer la sécurité de l'ensemble fonctionnel.

Le premier espace E1 peut correspondre à une zone thermique froide, dans laquelle seront placés des appareils électriques ou parties d'appareils qui ne chauffent pas ou très peu. Le deuxième espace E2 peut correspondre à une zone thermique chaude, dans laquelle seront placés des appareils électriques ou parties d'appareils électriques qui chauffent. Par exemple, le premier espace E1 contiendra des disjoncteurs, des contacteurs ou les parties contrôle des variateurs de vitesse alors que le deuxième espace E2 contiendra les parties puissance des variateurs de vitesse, des inductances de filtrage, des résistances de freinage, ou des transformateurs.

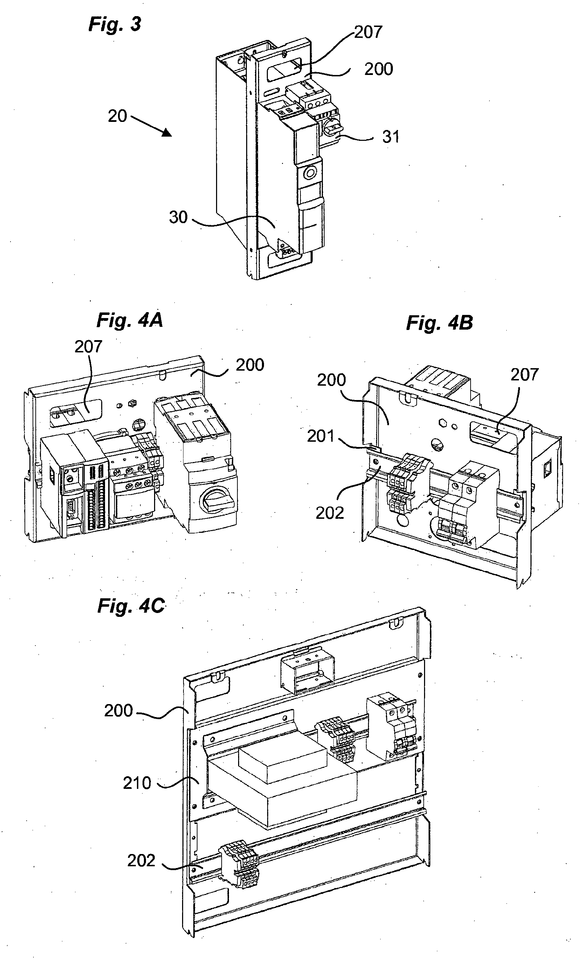

En référence aux figures 3 à 5, une unité fonctionnelle 20 comporte principalement une platine 200 présentant une face avant et une face arrière sur lesquelles peuvent être montés un ou plusieurs appareils électriques, aptes à remplir des fonctions de contrôle-commande, de protection, de génération d'alimentation, de sécurité, de ventilation ou de refroidissement. Bien entendu, une platine peut ne supporter aucun appareil électrique et être employée simplement pour former une partie de la paroi de séparation. Les platines peuvent être réalisées en différentes tailles selon la quantité d'appareils électriques supportés. Elles sont par exemple réalisées à partir de tôles découpées et pliées.

L'architecture de l'ossature interne et les montants et traverses employées seront alors adaptée aux unités fonctionnelles à mettre en place.

Certaines unités fonctionnelles comportent juste des appareils électriques de contrôle/commande, qui ne nécessitent pas forcément d'être refroidis alors que d'autres unités fonctionnelles électriques peuvent comporter des appareils électriques de puissance qui sont susceptibles de beaucoup chauffer et qu'il est donc nécessaire de refroidir.

Dans l'enveloppe électrique les unités fonctionnelles 20 sont montées de manière contigüe sur l'ossature interne, de manière à former la paroi de séparation P.

La figure 3 présente un premier exemple d'unité fonctionnelle 20 dont la platine 200 supporte un variateur de vitesse 30 et un disjoncteur 31. Dans cette unité fonctionnelle 20, le disjoncteur 31 est monté sur la face avant, tandis que le variateur de vitesse 30 traverse la platine 200 de manière à avoir sa partie contrôle située du côté de la face avant et sa partie puissance située du côté de la face arrière.

Les figures 4A et 4B présentent un deuxième exemple d'unité fonctionnelle 20. Sur la face avant de la platine, sont montés notamment un contacteur 32 et un disjoncteur 31. Sur sa face arrière, la platine 200 comporte par exemple deux pattes 201 réalisées sur deux côtés opposés parallèles permettant la fixation d'un rail DIN 202 agencé pour accueillir des appareils électriques. Plusieurs pattes peuvent être prévues sur la hauteur de la platine afin de fixer plusieurs rails DIN ou plaques de fixation 210 pour appareils électriques (figure 4C).

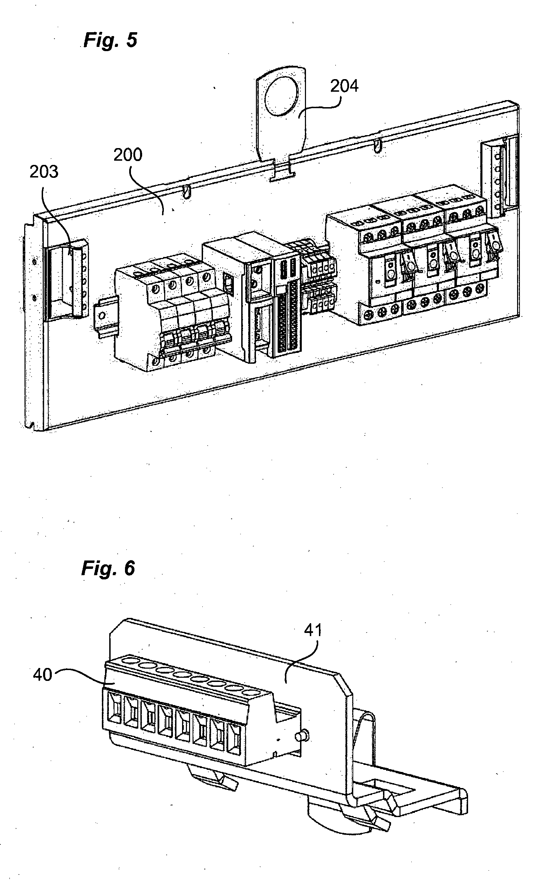

La figure 5 présente un troisième exemple d'unité fonctionnelle 20 dont la platine 200 présente deux poignées latérales 203 permettant la préhension à deux mains de l'unité fonctionnelle 20 et une ouverture prévue sur sa tranche supérieure, au milieu de sa longueur, destinée à accueillir un anneau de levage ou une poignée de préhension 204 de l'unité fonctionnelle.

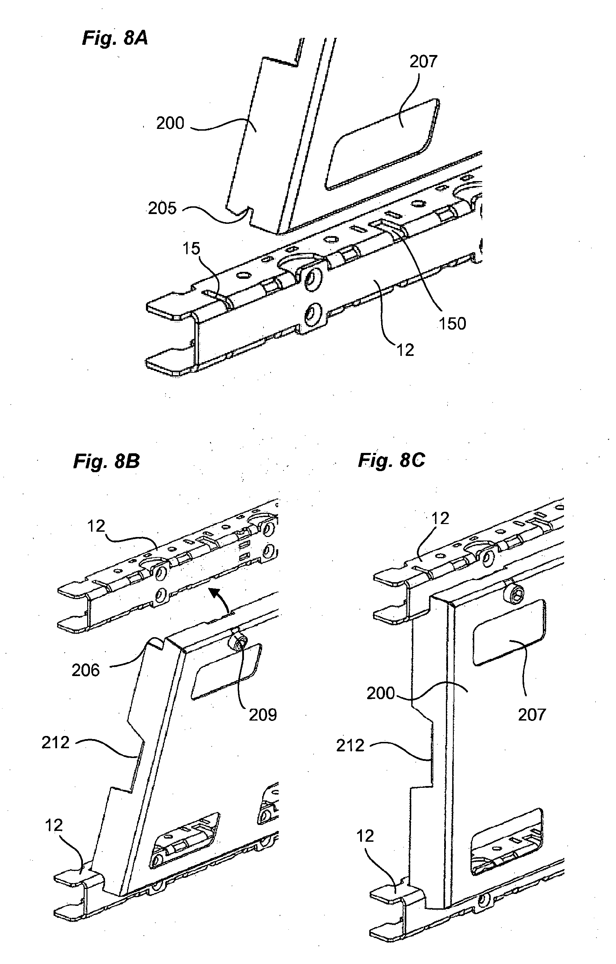

En référence aux figures 8A à 8C, la platine 200 d'une unité fonctionnelle 20 comporte deux chants verticaux comprenant chacun sur leur partie basse une encoche 205 (figure 8A) agencées pour coopérer avec des orifices 15 correspondants réalisés sur une première traverse de l'ossature interne de l'enveloppe électrique. Sur leur partie haute, les chants comportent une découpe 206 (figure 8B) permettant à la platine 200 d'épouser la forme d'une deuxième traverse de l'ossature interne, parallèle à la première traverse. Sur la figure 8B, on peut voir que la platine est inclinée pour insérer les encoches 205 dans lesdits orifices 15 puis la platine est pivotée suivant un plan vertical jusqu'à la position verticale dans laquelle elle est fixée sur la deuxième traverse. Les encoches et découpes réalisées sur chaque platine sont réalisées de manière à assurer la contigüité des unités fonctionnelles entre elles et à former la paroi de séparation la plus étanche possible entre les deux espaces E1, E2. La dimension des orifices 15 permet d'accueillir un seul chant d'une unité fonctionnelle à chacune des extrémités de la traverse principale 12, tandis que d'autres orifices 150 distribués sur la longueur de la traverse principale 12 permettent d'accueillir deux chants d'unités fonctionnelles adjacentes. Enfin un ou plusieurs systèmes de fixation peuvent avantageusement être insérés dans un espace adéquat sur la platine pour la solidariser à la traverse principale 12 ou secondaire 14, afin de rigidifier la liaison. Il s'agit par exemple d'une ou plusieurs vis 209 traversant des orifices réalisés à travers la platine 200, suivant sa longueur, et venant se loger dans plusieurs orifices correspondants réalisés sur les traverses.

Selon l'invention, les chants verticaux de la platine 200 peuvent comporter une échancrure 212 permettant le passage à l'arrière d'une traverse principale 12 (figure 2E).

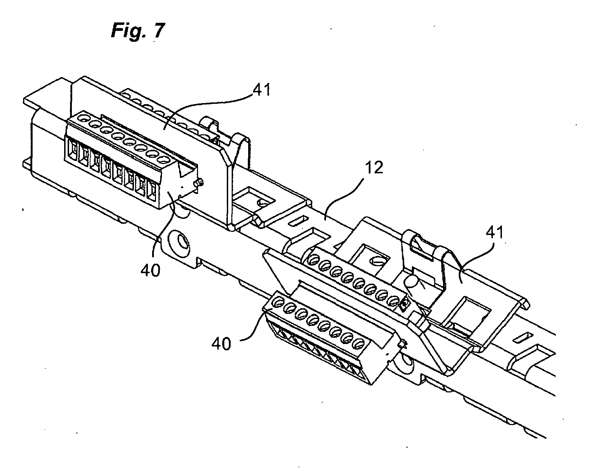

Selon l'invention, l'ensemble fonctionnel comporte également un ou plusieurs connecteurs 40 montés chacun sur un support de fixation 41 agencé pour se fixer par clipsage ou d'autres moyens sur les montants ou traverses de l'ossature interne (figures 6 et 7). La fixation des supports de fixation 41 permet l'installation des connecteurs sur l'ossature interne et la mise en place du système de distribution électrique à l'arrière de l'enveloppe, dans le deuxième espace E2.

Chaque unité fonctionnelle peut ainsi se connecter sur un ou plusieurs de ces connecteurs de manière à pouvoir être alimentée. Selon le nombre et le type d'appareils électriques présents sur l'unité fonctionnelle 20, un ou plusieurs connecteurs pourront être nécessaires pour les différentes alimentations à fournir aux appareils de l'unité fonctionnelle. En référence aux figures 3, 4A et 4B, la platine 200 d'une unité fonctionnelle comporte au moins une ouverture 207 à travers laquelle vient s'insérer un connecteur 40 installé sur son support 41. L'ouverture 207 est dessinée de telle façon à recouvrir le support afin de ne pas compromettre l'étanchéité entre les deux espaces E1, E2 dans l'enveloppe. Un câble d'alimentation de l'unité fonctionnelle vient donc se raccorder directement sur le connecteur 40, du côté de la face avant de la platine 200. Du côté de la face arrière de la platine 200, le câble relié au connecteur 40 s'interconnecte à l'arrière avec le système de distribution électrique d'autres unités fonctionnelles ou avec une source d'alimentation. L'agencement de l'invention permet donc de déporter le câblage dans le deuxième espace E2 de l'enveloppe, permettant de clarifier l'architecture de l'ensemble fonctionnel, de limiter tout risque d'arrachement intempestif d'un câble et de diminuer la surface nécessaire au cheminement des câbles dans la partie avant. Les connecteurs 40 étant indépendants par rapport à l'unité fonctionnelle, ceux-ci peuvent facilement être remplacés ou déplacés.

Selon l'invention, il est possible de prévoir sur chaque platine 200 un système de fixation supplémentaire permettant à la platine 200 de venir se fixer, non pas sur les montants et traverses précités, mais sur une plaque 5 de montage rapide. Cette plaque 5 est par exemple réalisée en tôle et vient occuper le fond de l'enveloppe électrique. La plaque 5 comporte des orifices de montage répartis à un pas régulier sur sa surface de manière à proposer différentes positions de fixation. La plaque comporte ainsi des orifices 50 de forme carrée et, au-dessus de chacun de ces orifices 50 de forme carrée, un orifice 51 de forme ronde. La figure 12 montre le système de fixation supplémentaire qui comporte des crochets 6 réalisés suivant chaque chant vertical de la platine 200 d'une unité fonctionnelle. Ces crochets 6 sont destinés à venir s'insérer dans les orifices 50 de forme carrée de la plaque 5 tandis que le verrouillage de la platine sur la plaque 5 est par exemple réalisé grâce à des vis 209, du même type que celle décrite précédemment, s'insérant dans les orifices de la platine 200 et venant se loger dans les orifices 51 de forme ronde.

L'invention présente donc plusieurs avantages, elle permet à la fois de proposer un agencement mécanique modulaire et parfaitement ajustable aux besoins du client, de tenir compte de la spécificité thermique de chaque appareil monté sur une unité fonctionnelle et d'optimiser la zone d'installation par un système de distribution électrique situé dans la partie arrière de l'enveloppe électrique.

## Revendications

1. Enveloppe électrique comportant une partie avant et une partie arrière, une ossature externe définissant la forme générale de l'enveloppe électrique et une ossature interne comprenant des montants et traverses de fixation positionnés dans un même plan, un ensemble fonctionnel fixé sur l'ossature interne et comprenant une pluralité d'unités fonctionnelles (20) dotées chacune d'une platine (200) destinée à recevoir un ou plusieurs appareils électriques, **caractérisée en ce que** :
- les platines (200) sont fixées sur lesdits montants et traverses de fixation de manière contigüe pour former une paroi de séparation (P) agencée suivant ledit plan et délimitant un premier espace (E1) situé vers la partie avant et un deuxième espace (E2) situé vers la partie arrière et destiné à recevoir un système de distribution électrique,
- chaque platine (200) comporte au moins une ouverture (207),
- l'ensemble fonctionnel comporte au moins un support (41) fixé de manière indépendante sur un montant ou traverse de l'ossature interne et un connecteur (40) électrique agencé sur ledit support (41) et destiné à alimenter une unité fonctionnelle, ledit support étant positionné sur le montant ou traverse de fixation de manière à permettre au connecteur (40) de traverser ladite ouverture (207) réalisée à travers la platine (200),
- un câble d'alimentation de l'unité fonctionnelle est destiné à venir se raccorder directement sur le connecteur (40) électrique, du côté de la face avant de la platine (200) de l'unité fonctionnelle,
- le câble d'alimentation relié au connecteur (40) s'interconnecte à l'arrière avec le système de distribution électrique d'autres unités fonctionnelles ou avec une source d'alimentation.

2. Enveloppe électrique selon la revendication 1, **caractérisée en ce que** chaque platine (200) comporte des encoches (205) destinées à coopérer avec des orifices (15) réalisés sur des montants ou traverses de fixation de l'ossature interne.

3. Enveloppe électrique selon la revendication 1, **caractérisée en ce que** le support (41) de connecteur comporte un système de fixation par clipsage sur un montant ou traverse de l'ossature interne.

4. Enveloppe électrique selon la revendication 1, **caractérisée en ce que** chaque platine (200) est de forme rectangulaire présentant une face avant de fixation pour des appareils électriques et une face arrière.

5. Enveloppe électrique selon la revendication 4, **caractérisée en ce que** la platine (200) comporte un rail DIN (202) ou une plaque (210) fixé sur sa face arrière de manière à pouvoir fixer un ou plusieurs appareils électriques.

6. Enveloppe électrique selon la revendication 1, **caractérisée en ce que** l'ossature interne comporte deux montants verticaux, dits principaux (10, 11) et plusieurs traverses horizontales, dites principales (12), s'étendant entre les deux montants principaux (10, 11).

7. Enveloppe électrique selon la revendication 6, **caractérisée en ce que** chaque platine (200) comporte une échancrure (212) permettant le passage d'une traverse principale (12)

8. Enveloppe électrique selon la revendication 6, **caractérisée en ce que** l'ossature interne comporte au moins un montant vertical, dit secondaire (13), s'étendant entre deux traverses principales (12).

9. Enveloppe électrique selon la revendication 8, **caractérisée en ce que** l'ossature interne comporte au moins une traverse horizontale, dite secondaire (14) s'étendant entre un montant secondaire (13) et un montant principal (10, 11) ou entre deux montants secondaires (13).

10. Enveloppe électrique selon la revendication 8, **caractérisée en ce que** chaque platine comporte deux chants verticaux parallèles munis, sur leur partie basse, d'encoches (205) agencées pour coopérer avec des orifices (15) réalisés sur une première traverse (12) de l'ossature interne et, sur leur partie haute, d'une découpe (206) permettant d'épouser la forme d'une deuxième traverse (12) de l'ossature interne.

11. Enveloppe électrique selon la revendication 1, **caractérisée en ce que** la platine (200) comporte une ouverture destinée à accueillir un anneau de levage ou une poignée de préhension (204).

12. Enveloppe électrique selon la revendication 1, **caractérisée en ce que** la platine (200) comporte des crochets (6) agencés pour fixer la platine (200) sur une plaque (5) de montage.

## Patentansprüche

1. Elektrogehäuse mit einem vorderen Bereich und einem rückwärtigen Bereich, einem äußeren Rahmengestell, das die grobe Kontur des Elektrogehäuses bestimmt, einem inneren Rahmengestell mit in einer Ebene angeordneten Befestigungs-Längsprofilen und Querprofilen sowie einer am inneren Rahmengestell befestigten Funktionsanordnung mit mehreren Funktionseinheiten (20), die jeweils eine Grundplatte (200) zur Aufnahme eines oder mehrerer elektrischer Geräte umfassen, **dadurch gekennzeichnet, dass**
- die Grundplatten (200) aneinandergrenzend auf den genannten Längs- und Querprofilen befestigt sind, um so eine in der genannten Ebene angeordnete Trennwand (P) zu bilden, die einen zum vorderen Bereich orientierten ersten Raum (E1) sowie einen zum rückwärtigen Bereich orientierten zweiten Raum (E2) begrenzt,
- in jeder Grundplatte (200) mindestens eine Öffnung (207) ausgebildet ist und
- die Funktionsanordnung mindestens einen an einem Längsprofil oder Querprofil des inneren Rahmengestells unabhängig befestigten Träger (41) sowie einen auf diesem Träger (41) angeordneten Steckverbinder (40) umfasst, wobei der genannte Träger so auf dem Befestigungs-Längsprofil oder -Querprofil angeordnet ist, dass der Steckverbinder (40) die in der Grundplatte (200) ausgebildete Öffnung (207) durchragen kann.

2. Elektrogehäuse nach Anspruch 1, **dadurch gekennzeichnet, dass** in jeder Grundplatte (200) Einkerbungen (205) ausgebildet sind, die dazu dienen, mit in den Längs- bzw. Querprofilen des inneren Rahmengestells ausgebildeten Öffnungen (15) zusammenzuwirken.

3. Elektrogehäuse nach Anspruch 1, **dadurch gekennzeichnet, dass** der Träger (41) für den Steckverbinder ein System zur Schnappbefestigung auf einem Längs- oder Querprofil des inneren Rahmengestells umfasst.

4. Elektrogehäuse nach Anspruch 1, **dadurch gekennzeichnet, dass** alle Grundplatten (200) rechteckig ausgebildet sind und eine Vorderseite zur Befestigung der elektrischen Geräte sowie eine Rückseite umfassen.

5. Elektrogehäuse nach Anspruch 4, **dadurch gekennzeichnet, dass** die Grundplatte (200) eine an der Rückseite befestigte DIN-Tragschiene (202) oder Trägerplatte (210) zur Befestigung eines oder mehrerer elektrischer Geräte umfasst.

6. Elektrogehäuse nach Anspruch 1, **dadurch gekennzeichnet, dass** das innere Rahmengestell zwei als Haupt-Längsprofile (10, 11) bezeichnete vertikale Längsprofile sowie mehrere als Haupt-Querprofile (12) bezeichnete horizontale Querprofile umfasst, die zwischen den beiden Haupt-Längsprofilen (10, 11) angeordnet sind.

7. Elektrogehäuse nach Anspruch 6, **dadurch gekennzeichnet, dass** in jeder Grundplatte (200) ein Ausschnitt (212) ausgebildet ist, durch den ein Haupt-Querprofil (12) hindurchgeführt werden kann.

8. Elektrogehäuse nach Anspruch 6, **dadurch gekennzeichnet, dass** das innere Rahmengestell mindestens ein als Hilfs-Längsprofil (13) bezeichnetes vertikales Längsprofil umfasst, das zwischen zwei Haupt-Querprofilen (12) angeordnet ist.

9. Elektrogehäuse nach Anspruch 8, **dadurch gekennzeichnet, dass** das innere Rahmengestell mindestens ein als Hilfs-Querprofil (14) bezeichnetes horizontales Querprofil umfasst, das zwischen einem Hilfs-Längsprofil (13) und einem Haupt-Längsprofil (10, 11) oder zwischen zwei Hilfs-Längsprofilen (13) angeordnet ist.

10. Elektrogehäuse nach Anspruch 8, **dadurch gekennzeichnet, dass** jede Grundplatte zwei parallel zueinander angeordnete, senkrechte Seitenwände umfasst, in deren unterem Bereich Einkerbungen (205), die dazu dienen, mit in einem ersten Querprofil (12) ausgebildeten Öffnungen (15) zusammenzuwirken, und in deren oberem Bereich ein Absatz (206) ausgebildet ist, der an die Form eines zweiten Querprofils (12) des inneren Rahmengestells angeschmiegt werden kann.

11. Elektrogehäuse nach Anspruch 1, **dadurch gekennzeichnet, dass** die Grundplatte (200) eine Öffnung zur Aufnahme einer Tragöse oder eines Traggriffs (204) umfasst.

12. Elektrogehäuse nach Anspruch 1, **dadurch gekennzeichnet, dass** an der Grundplatte (200) Haken (6) zur Befestigung der Grundplatte (200) auf einer Montageplatte (5) ausgebildet sind.

## Claims

1. Electrical enclosure comprising a front part and a rear part, an external framework defining the general shape of the electrical enclosure and an internal framework comprising fixing uprights and cross members positioned in a same plane, a functional assembly fixed onto the internal framework and comprising a plurality of functional units (20) each provided with a deck (200) intended to receive one or more electrical apparatuses, **characterized in that**:
- the decks (200) are fixed onto said fixing uprights and cross members contiguously to form a separation wall (P) arranged in said plane and delimiting a first space (E1) situated towards the front part and a second space (E2) situated towards the rear part and intended to receive an electrical distribution system,
- each deck (200) comprises at least one opening (207),
- the functional assembly comprises at least one support (41) fixed independently onto an upright or cross member of the internal framework and an electrical connector (40) arranged on said support (41) and intended to power a functional unit, said support being positioned on the fixing upright or cross member so as to allow the connector (40) to pass through said opening (207) produced through the deck (200),
- a power supply cable of the functional unit is intended to be connected directly to the electrical connector (40), on the side of the front face of the deck (200) of the functional unit,
- the power supply cable linked to the connector (40) is interconnected at the rear with the electrical distribution system of other functional units or with a power source.

2. Electrical enclosure according to Claim 1, **characterized in that** each deck (200) includes notches (205) intended to co-operate with orifices (15) produced in fixing uprights or cross members of the internal framework.

3. Electrical enclosure according to Claim 1, **characterized in that** the connector support (41) includes a clip-fastening system for fixing onto an upright or cross member of the internal framework.

4. Electrical enclosure according to Claim 1, **characterized in that** each deck (200) is of rectangular form having a front fixing face for electrical apparatuses and a rear face.

5. Electrical enclosure according to Claim 4, **characterized in that** the deck (200) includes a DIN rail (202) or a plate (210) fixed onto its rear face so as to be able to fix one or more electrical apparatuses.

6. Electrical enclosure according to Claim 1, **characterized in that** the internal framework includes two so-called main vertical uprights (10, 11) and a plurality of so-called main horizontal cross members (12), extending between the two main uprights (10, 11).

7. Electrical enclosure according to Claim 6, **characterized in that** each deck (200) includes a cut-out (212) allowing for the passage of a main cross member (12).

8. Electrical enclosure according to Claim 6, **characterized in that** the internal framework includes at least one so-called secondary vertical upright (13), extending between two main cross members (12).

9. Electrical enclosure according to Claim 8, **characterized in that** the internal framework includes at least one so-called secondary horizontal cross member (14) extending between a secondary upright (13) and a main upright (10, 11) or between two secondary uprights (13).

10. Electrical enclosure according to Claim 8, **characterized in that** each deck includes two parallel vertical edges provided, on their bottom part, with notches (205) arranged to co-operate with orifices (15) produced on a first cross member (12) of the internal framework and, on their top part, a cut-out (206) making it possible to closely follow the form of a second cross member (12) of the internal framework.

11. Electrical enclosure according to Claim 1, **characterized in that** the deck (200) includes an opening intended to accommodate a lifting ring or a gripping handle (204).

12. Electrical enclosure according to Claim 1, **characterized in that** the deck (200) includes hooks (6) arranged to fix the deck (200) onto a mounting plate (5).
